# EUROPÄISCHE PATENTSCHRIFT

(11) **EP 3 681 781 B1**
(45) Veröffentlichungstag und Bekanntmachung des Hinweises auf die Patenterteilung: **03.11.2021**
(21) Anmeldenummer: 18779221.3
(22) Anmeldetag: 12.09.2018
(51) Int. Cl.: B62B 5/06, B62B 5/00

(54) **VERFAHRWAGEN**
TRAVELING CARRIAGE
CHARIOT DE DÉPLACEMENT

(30) Priorität: 13.09.2017 DE 102017121161
(43) Veröffentlichungstag der Anmeldung: 22.07.2020
(73) Patentinhaber: Junghans, Ingo, 06636 Laucha (DE)
(72) Erfinder: Junghans, Ingo, 06636 Laucha (DE)
(74) Vertreter: Müller, Enno
(86) Internationale Anmeldenummer: PCT/EP2018/074626
(87) Internationale Veröffentlichungsnummer: WO 2019/053069

(56) Entgegenhaltungen:
- WO-A1-2012/072856
- WO-A1-2013/171430
- AT-U1- 10 901
- FR-A1- 2 843 563

## Beschreibung

### Gebiet der Technik

Die Erfindung betrifft einen Verfahrwagen mit den Merkmalen des Oberbegriffs des Anspruches 1.

### Stand der Technik

Verfahrwagen der in Rede stehenden Art sind bekannt, so beispielsweise in Form sogenannter Werkstattwagen. Diese werden vornehmlich mittels eines Zugfahrzeuges über längere Strecken bewegt. Hierzu dient die Verbindungsstange, die in Art einer Deichsel ausgebildet sein kann. In der Nutzungsstellung kann sich die Verbindungsstange im Wesentlichen orientiert an einer Horizontalebene erstrecken, während in der Nichtnutzungsstellung der Verbindungsstange diese in einer hochgeschwenkten Stellung verbracht ist. In dieser Stellung erstreckt sich die Verbindungsstange orientiert an einer Vertikalebene.

Bei einem aus der WO 2012/072856 A1 bekannten Verfahrwagen ist die Verbindungsstange mit einer die Drehachse umgebende Wendelfeder, die unmittelbar an dem Chassis in Anschlag ist, in die hochgeschwenkte Stellung vorgespannt. Ein vergleichbarer Stand der Technik ist aus der WO 2013/171430 A1 bekannt. Aus der AT 10 901 U1 ist ein Verfahrwagen bekannt, bei welchem ein Betätigungshebel ein Anheben und Absenken eines Heberahmens innerhalb des Verfahrwagens ermöglicht. Der Betätigungshebel ist hinsichtlich eines Verschwenkens nach unten durch eine Gasdruckfeder gedämpft. Aus der FR 2843563 A1 ist eine Verbindungsstange an einem Verfahrwagen bekannt, die durch eine Feder in eine etwas angehobene Stellung versetzbar ist. Hierbei liegt die Verbindungsstange auf einem Kautschukteil auf, das bei einem Freilassen der Verbindungsstange ein Hochschwenken noch verstärkt.

Ausgehend von dem dargelegten Stand der Technik beschäftigt sich die Erfindung mit der Aufgabenstellung, einen Verfahrwagen mit einer Verbindungsstange anzugeben, der bei günstigem Verhalten der Verbindungsstange auch vorteilhaft mit einer solchen Vorrichtung ausrüstbar ist.

Diese Aufgabe ist beim Gegenstand des Anspruches 1 gelöst, wobei darauf abgestellt ist, dass die Verbindungsstange mit einer bewegungsgedämpften Feder in ihre hochgeschwenkte Stellung vorgespannt ist, dass die Verbindungsstange an einer am Chassis befestigten Halterung angelenkt ist, dass die Feder anderenends an einem an der Halterung festgelegten Halterungsarm oder an einem Rahmenabschnitt angelenkt ist, wobei bei Anlenkung der Feder an dem Rahmenabschnitt die Feder sich im abgeschwenkten Zustand der Verbindungsstange vollständig unterhalb des Chassis und in etwa horizontal ausgerichtet erstreckt, und dass in beiden Fällen die Anlenkung an der Verbindungsstange im Bereich eines die Verbindungsstange verlängernden, bezüglich der Schwenkachse der Verbindungsstange gegenüberliegenden Hebelfortsatzes erfolgt.

### Zusammenfassung der Erfindung

Durch die Anordnung einer bewegungsgedämpften Feder ist eine gebrauchsgünstige und gebrauchssichere Anordnung geschaffen. Die bewegungsgedämpfte Feder führt zu einer kontrollierten Schwenk-Rückverlagerung der Verbindungsstange in die hochgeschwenkte Stellung. Es ist hierdurch eine gleichmäßige komfortable Schwenkbewegung der Verbindungsstange erreichbar. Es besteht zufolge der vorgeschlagenen Ausbildung nicht die Gefahr, dass die Verbindungsstange nach Fortfall der diese in der abgeschwenkten Stellung haltenden Kraft schlagartig aufschwenkt, was gegebenenfalls zu Verletzungen des nahe stehenden Bedieners und/oder zu Beschädigungen etwaigen auf dem Verfahrwagen angeordneten Transportgutes führen kann.

Die Feder kann gemäß einer bevorzugten Ausgestaltung eine Gasdruckfeder sein. Eine solche Gasdruckfeder ist in bekannter Weise ein hydropneumatisches Verstellelement. Dieses kann beispie**l**sweise mit komprimiertem Stickstoff gefüllt sein.

Gasdruckfedern haben gegenüber herkömmlichen, rein mechanischen Federn eine um ein Vielfaches verlängerte Nutzungsdauer. Darüber hinaus ist durch Anordnung einer solchen Gasdruckfeder eine stets gleichbleibende Ausrichtung der Verbindungsstange in der hochgeschwenkten Stellung erreichbar. Diese hochgeschwenkte Endstellung der Verbindungsstange und somit der Schwenkverlagerungsweg, kann zufolge Anpassung diesbezüglicher Parameter der Gasdruckfeder angepasst werden.

Auch kann die Feder eine hydraulisch gedämpfte, mechanische Feder sein, weiter insbesondere eine solche hydraulisch gedämpfte Feder mit Dämpfungseigenschaften, die der einer Gasdruckfeder angepasst sind oder ähneln.

Die Feder ist einerends an einem Chassis des Verfahrwagens und anderenends an der Verbindungsstange angelenkt. Im Bereich des Chassis erfährt die Feder einen bevorzugten fixen Anlenkpunkt. Mit dem diesem fixen Anlenkpunkt abgewandten Ende, beispielsweise einer Kolbenstange der Feder, wirkt die Feder unmittelbar oder mittelbar auf die Verbindungsstange ein.

Die Anlenkung an der Verbindungsstange ist im Bereich eines bzgl. der Schwenkachse der Verbindungsstange gegenüberliegenden Hebelfortsatzes gegeben. Dieser Hebelfortsatz bildet im Wesentlichen eine über die Schwenkachse hinausgehende Verlängerung der Verbindungsstange, so dass eine Druckeinwirkung auf diesen Hebelfortsatz über die Feder ein Hochschwenken der Verbindungsstange um die Schwenkachse bewirkt. Je nach Beabstandung des Anlenkpunktes am Hebelfortsatz zur Schwenkachse ist der wirksame Hebel einstellbar.

Die Verbindungsstange ist in einer am Chassis befestigten Halterung angelenkt. Die Halterung kann beispielsweise ausgelegt sein für eine Schweißverbindung, weiter beispielsweise Schraub- oder Nietverbindung, an einem Rahmenteil des Chassis. Die Feder ist bei einer solchen Ausgestaltung mit ihrer dem Anlenkpunkt an der Verbindungsstange entfernten Ende an einem Halterungsarm, der an der vorbeschriebenen Halterung festgelegt ist, angelenkt. Es ist so über den Halterungsarm und die Halterung eine mittelbare Befestigung des einen Endes der Feder am Chassis erreichbar. Insgesamt kann so eine Verbindungsstangen-Feder-Einheit geschaffen sein, die insgesamt und gegebenenfalls funktionsfähig vormontiert an einem Verfahrwagen-Chassis anbringbar ist.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Unteransicht einen Verfahrwagen mit einem Chassis und zwei Rollenpaaren, sowie weiter einer Verbindungsstange und einer auf die Verbindungsstange wirkenden Feder;
- Fig. 2: eine Ausschnittvergrößerung des Anlenkbereiches der Verbindungsstange in einer ersten Ausführungsform, betreffend die abgesenkte Nutzungsstellung der Verbindungsstange;
- Fig. 3: eine der Figur 2 im Wesentlichen entsprechende Darstellung, die hochgeschwenkte Nichtbenutzungsstellung der Verbindungsstange betreffend;
- Fig. 4: eine im Wesentlichen der Figur 2 entsprechende Darstellung, betreffend eine zweite Ausführungsform.

### Beschreibung der Ausführungsformen

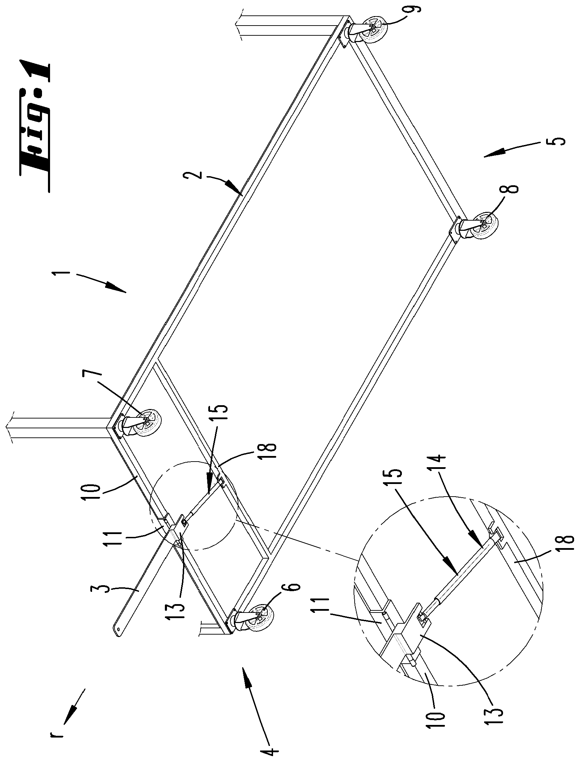

Dargestellt und beschrieben ist, zunächst mit Bezug zu Figur 1, ein Verfahrwagen 1 mit einem Chassis 2 und einer als Deichsel ausgebildeten Verbindungsstange 3.

Das Chassis 2 und somit der gesamte Verfahrwagen 1 stützt sich über zwei Rollenpaare 4, 5 und somit insgesamt entsprechend über vier Rollen 6 bis 9 auf dem Boden ab.

Die Rollen 6 bis 9 können unterseitig an dem Chassis 2 steckgehaltert sein und um eine im üblichen Gebrauchszustand vertikale Schwenkachse schwenkbar angeordnet sein. Darüber hinaus können einzelne oder auch alle Rollen über eine Feststellbremse verfügen.

Die Verbindungsstange 3 ist in üblicher Verfahrrichtung r des Verfahrwagens 1 vorne angeordnet, insbesondere zugeordnet einem vorderen Querträger 10. An diesem ist in dem dargestellten Ausführungsbeispiel eine Halterung 11 angeformt, zur schwenkbaren Halterung der Verbindungsstange 3. Der die Halterung 11 bevorzugt durchsetzende Schwenkbolzen 12 erstreckt sich mit dessen geometrischer Schwenkachse x quergerichtet zur Verfahrrichtung r.

An der Verbindungsstange 3 ist ein die Verbindungsstange 3 über die Schwenkachse x hinaus verlängernder, entsprechend bezüglich dieser Schwenkachse x der Verbindungsstange 3 im Wesentlichen gegenüberliegender Hebelfortsatz 13 angeformt.

Auf diesen Hebelfortsatz 13 der Verbindungsstange 3 wirkt eine bewegungsgedämpfte Feder 14 in Form einer Gasdruckfeder 15 ein.

Diese Gasddruckfeder 15 weist in üblicher Ausgestaltung ein bevorzugt mit komprimiertem Stickstoff gefülltes Druckrohr 16 auf, in welchem ein in Längsrichtung des Druckrohres 16 verlagerbarer Kolben mit einer nach außen tretenden Kolbenstange 17 angeordnet ist.

Durch das in dem Druckrohr 16 befindliche Gas ist die Kolbenstange 17 stets in Richtung ihrer Längserstreckung nach außen, entsprechend die Feder 14 insgesamt in eine Streckstellung verbringend, belastet.

Die Gasdruckfeder 15 ist in dem dargestellten Ausführungsbeispiel druckrohrseitig an dem Chassis 2 schwenkbeweglich gehaltert. Hierzu kann an einem Rahmenabschnitt 18 des Chassis 2 eine entsprechende Aufnahme gegeben sein, die eine Schwenkbeweglichkeit der Gasdruckfeder 15 anbietet. Die diesbezügliche Schwenkachse y erstreckt sich gleichgerichtet zu der Schwenkachse x der Verbindungsstange 3.

Das dieser Anbindung abgewandte Ende der Kolbenstange 17 ist wiederum schwenkbeweglich angelenkt an dem Hebelfortsatz 13 der Verbindungsstange 3, wobei auch die diesbezügliche Schwenkachse z gleichgerichtet ist zu der druckrohrseitigen Schwenkachse x der Verbindungsstange 3.

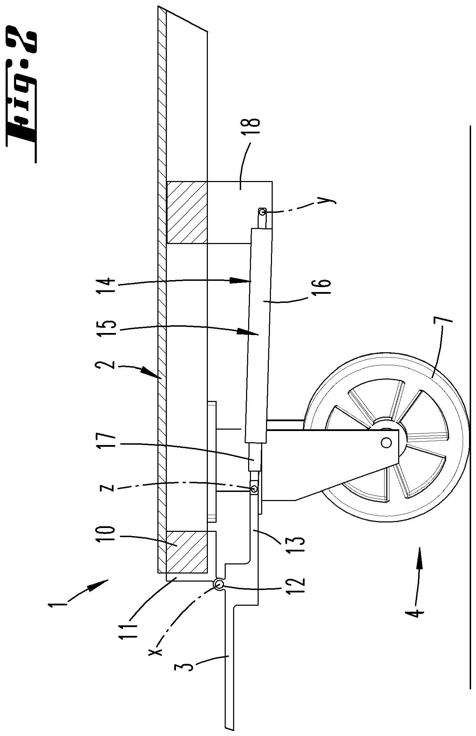

In einer üblichen Nutzungsstellung ist die Verbindungsstange 3, wie auch beispielhaft in Figur 2 dargestellt, im Wesentlichen in einer Horizontalebene oder entlang dieser orientiert ausgerichtet, weiter beispielsweise zum Anhängen des Verfahrwagens 1 an einen Zugwagen. Das Abschwenken der Verbindungsstange 3 ist erreicht entgegen der auf die Verbindungsstange 3 einwirkenden Kraft der Gasdruckfeder 15, wobei weiter die abgesenkte Stellung bei entsprechender Nutzung, beispielsweise durch die Ankoppelmechanik am Zugfahrzeug, gesichert ist.

In dem abgeschwenkten Zustand der Verbindungsstange 3 erstreckt sich die Gasdruckfeder 15 vollständig unterhalb des Chassis und in etwa horizontal ausgerichtet. Bevorzugt, wie auch beim Ausführungsbeispiel gegeben, besteht in der Wirkrichtung gegenüber einer Horizontalen ein spitzer Winkel von wenigen Grad.

Der Hebelfortsatz 13 ist bevorzugt, wie beim Ausführungsbeispiel auch gegeben, an einem vordersten Rand des Chassis, unterhalb einer von oben nutzbaren Bodenfläche des Chassis, ausgebildet. Zufolge einer in dem abgesenkten Zustand gemäß Fig. 2, ausgehend von der Halterung 11, konkret dem Schwenkbolzen 12, erstreckt sich der Hebelfortsatz 13 zunächst vertikal nach unten und dann im Wesentlichen horizontal bis zur Verbindung mit der Gasdruckfeder 15, bevorzugt der Kolbenstange 17 der Gasdruckfeder 15. Somit ist in der Wirkrichtung der Gasdruckfeder 15 immer ein Moment um die Schwenkachse x sichergestellt.

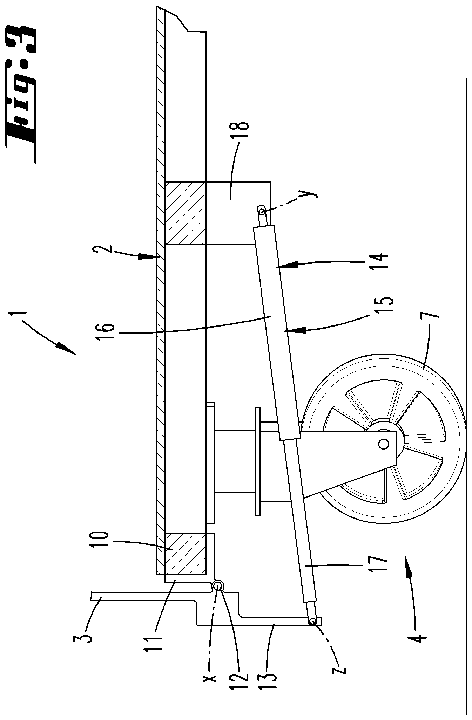

In der hochgeschwenkten Stellung gemäß Fig. 3 erstreckt sich die Gasdruckfeder 15 wie beim Ausführungsbeispiel auch dargestellt, ausgehend von ihrer chassisseitigen Schwenkachse y schräg nach unten, auch in einem spitzen Winkel zur Horizontalen. Der spitze Winkel in der hochgeschwenkten Stellung ist bevorzugt größer, zweifach oder mehr, bis hin zu beispielsweise zehnfach oder mehr als der spitze Winkel in der abgeschwenkten Stellung der Verbindungsstange 3.

Weiter bevorzugt liegt die Schwenkachse z in der hochgeschwenkten Stellung der Verbindungsstange 3 vorderseitig vor der Schwenkachse x, über welche die Verbindungsstange 3 an dem Chassis 2 schwenkbeweglich ist.

Mit Abkoppeln von dem Zugfahrzeug und somit bei einer Nichtbenutzung der Verbindungsstange 3 ist diese vorteilhaft in eine hochgeschwenkte Stellung zu verbringen. Die hochgeschwenkte Stellung ist auch aus arbeitsschutzrechtlichen Gründen vorteilhaft. Dieses Hochschwenken erfolgt zufolge der Anordnung der Gasdruckfeder 15 selbsttätig nach Aufheben der die Verbindungsstange 3 in ihrer abgeschwenkten Stellung haltenden Kraft.

Die bei abgeschwenkter Stellung der Verbindungsstange 3 in das Druckrohr 16 zwangsläufig eingeschobene Kolbenstange 17 fährt zufolge des auf den Kolben im Druckrohr 16 einwirkenden Drucks in Ausschubrichtung, die Verbindungsstange 3 um deren Schwenkachse x entsprechend hochschwenkend.

Insbesondere die selbsttätige Hochschwenkbewegung ist durch die Gasdruckfeder 15 bewegungsgedämpft. Die Gasdruckfeder weist hierzu in der Regel einen sehr flachen, annähernd linearen Kennlinienverlauf auf, was eine gleichmäßig komfortable Schwenkbewegung der Verbindungsstange 3 ermöglicht.

Auch kann über die Gasdruckfeder 15 eine stets gleiche Hochschwenkstellung der Verbindungsstange 3 erreichbar sein.

Die hochgeschwenkte Stellung kann eine zumindest annähernd vertikale Ausrichtungsstellung der Verbindungsstange 3 sein, gegebenenfalls eine Ausrichtung unter Einschluss eines Winkels von beispielsweise 80 bis 90° zum zu befahrbaren Boden.

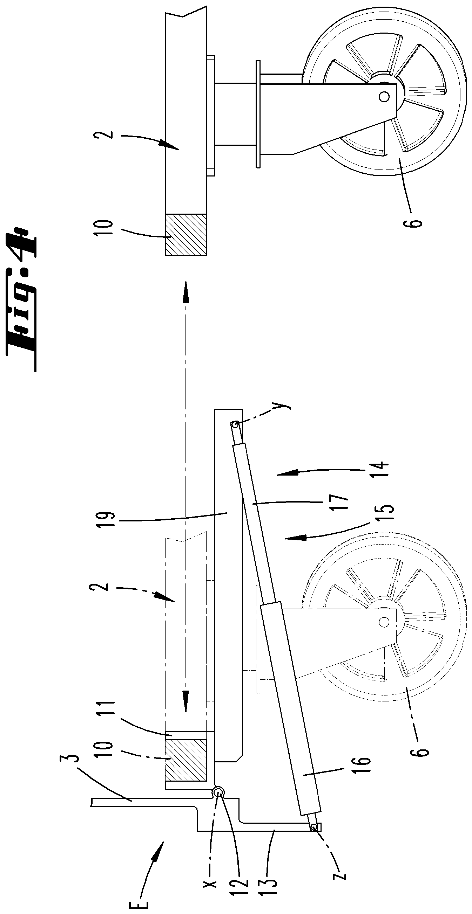

In Figur 4 ist eine zweite Ausführungsform dargestellt, in welcher eine beispielsweise vormontierte Verbindungsstangen-Feder-Einheit E an dem Chassis 2 anordbar ist.

Die Verbindungsstange ist auch in diesem Ausführungsbeispiel an einer hier im Querschnitt U-förmige Halterung 11 angelenkt. Weiter ist an dieser Halterung 11 ein Halterungsarm 19 befestigt, der sich von der Anlenkung der Verbindungsstange weg weisend erstreckt. In einem freien Endbereich des Halterungsarmes 19 ist die Feder 14, insbesondere die Gasdruckfeder 15, angelenkt, hier im Bereich eines freien Endes der Kolbenstange 17.

Das gegenüberliegende freie Ende des Druckrohres 16 ist angelenkt an dem Hebelfortsatz 13 der Verbindungsstange 3.

Die so gegebenenfalls vormontierte Einheit E kann unter teilweisem Umgreifen des Querträgers 10 durch die U-förmige Halterung 11 an dem Chassis 2 festgelegt werden, beispielsweise durch Schweißung. Der Halterungsarm 19 kann sich hiernach im Wesentlichen unterhalb des Chassis 2 erstrecken.

**Liste der Bezugszeichen**

| | | | |
|---|---|---|---|
| 1 | Verfahrwagen | r | Verfahrrichtung |
| 2 | Chassis | x | Schwenkachse |
| 3 | Verbindungsstange | y | Schwenkachse |
| 4 | Rollenpaar | z | Schwenkachse |
| 5 | Rollenpaar | | |
| 6 | Rolle | | |
| 7 | Rolle | | |
| 8 | Rolle | E | Einheit |
| 9 | Rolle | | |
| 10 | Querträger | | |
| 11 | Halterung | | |
| 12 | Schwenkbolzen | | |
| 13 | Hebelfortsatz | | |
| 14 | Feder | | |
| 15 | Gasdruckfeder | | |
| 16 | Druckrohr | | |
| 17 | Kolbenstange | | |
| 18 | Rahmenabschnitt | | |
| 19 | Halterungsarm | | |

## Patentansprüche

1. Verfahrwagen (1) mit mindestens zwei Rollenpaaren (4, 5), von denen das erste Rollenpaar (4) in üblicher Verfahrrichtung (r) des Verfahrwagens (1) vorne und das zweite Rollenpaar (5) hinten angeordnet ist, wobei weiter der Verfahrwagen (1) eine gelenkig an dem Verfahrwagen (1) angeordnete Verbindungsstange (3), zur Ankopplung etwa an einen Zugwagen, aufweist, welche Verbindungsstange (3) um eine Schwenkachse (x) zwischen einer abgeschwenkten und einer hochgeschwenkten Stellung bewegbar ist, wobei die Verbindungsstange (3) an einer am Chassis (2) befestigten Halterung (11) angelenkt ist und mit einer Feder (14) in ihre hochgeschwenkte Stellung vorgespannt ist, wobei die Feder (14) einerends an der Verbindungsstange (3) angelenkt ist, und wobei diese Anlenkung im Bereich eines die Verbindungsstange (3) verlängernden, bezüglich der Schwenkachse (x) der Verbindungsstange (3) gegenüberliegenden, Hebelfortsatzes (13) erfolgt, **dadurch gekennzeichnet, dass** die Feder (14) eine bewegungsgedämpfte Feder (14) ist, die Feder (14) anderenends an einem an der Halterung (11) festgelegten Halterungsarm (19) oder an einem Rahmenabschnitt (18) angelenkt ist, wobei bei Anlenkung der Feder (14) an dem Rahmenabschnitt (18) die Feder (14) sich im abgeschwenkten Zustand der Verbindungsstange (3) vollständig unterhalb des Chassis (2) und in etwa horizontal ausgerichtet erstreckt.

2. Verfahrwagen nach Anspruch 1, **dadurch gekennzeichnet, dass** die Feder (14) eine Gasdruckfeder (15) ist.

3. Verfahrwagen nach Anspruch 1, **dadurch gekennzeichnet, dass** die Feder (14) eine hydraulisch gedämpfte, mechanische Feder ist.

## Claims

1. Mobile carriage (1) comprising at least two pairs of rollers (4, 5), of which the first pair of rollers (4) is arranged at the front in the usual direction of travel (r) of the mobile carriage (1) and the second pair of rollers (5) is arranged at the rear, the mobile carriage (1) further having a connecting rod (3) which is arranged in an articulated manner on the mobile carriage (1) for coupling to a towing vehicle, for example, which connecting rod (3) is movable about a pivot axis (x) between a pivoted-out position and a pivoted-up position, the connecting rod (3) being articulated to a holder (11) attached to the chassis (2) and being preloaded into the pivoted-up position thereof by a spring (14), the spring (14) being articulated at one end to the connecting rod (3) and said articulation taking place in the region of a lever extension (13) which extends the connecting rod (3) and is opposite the connecting rod (3) with respect to the pivot axis (x), **characterised in that** the spring (14) is a movement-damped spring (14), **in that** the spring (14), at the other end, is articulated to a holding arm (19) fixed to the holder (11) or to a frame portion (18), the spring (14) extending completely below the chassis (2) and approximately horizontally in the pivoted-out state of the connecting rod (3) when the spring (14) is articulated on the frame portion (18).

2. Mobile carriage according to claim 1, **characterised in that** the spring (14) is a gas spring (15).

3. Mobile carriage according to claim 1, **characterised in that** the spring (14) is a hydraulically damped, mechanical spring.

## Revendications

1. Chariot de déplacement (1) avec au moins deux paires de roulettes (4, 5) dont la première paire de roulettes (4) est agencée à l'avant dans la direction de déplacement habituelle (r) du chariot de déplacement (1) et la deuxième paire de rouleaux (5) est agencée à l'arrière, dans lequel en outre le chariot de déplacement (1) présente une barre de liaison (3) agencée de manière articulée au chariot de déplacement (1) pour l'accouplement, par exemple, à un chariot de traction, laquelle barre de liaison (3) peut être déplacée autour d'un axe de pivotement (x) entre une position pivotée vers le bas et une position pivotée vers le haut, dans lequel la barre de liaison (3) est articulée à un support (11) fixé au châssis (2) et est précontrainte par un ressort (14) dans sa position pivotée vers le haut, dans lequel le ressort (14) est articulé à une extrémité à la barre de liaison (3), et cette articulation s'effectue dans la région d'un prolongement de levier (13) prolongeant la barre de liaison (3) et situé à l'opposé de la barre de liaison (3) par rapport à l'axe de pivotement (x), **caractérisé en ce que** le ressort (14) est un ressort à amortissement de mouvement (14), **en ce que** le ressort (14) est articulé à l'autre extrémité à un bras de support (19) fixé sur le support (11) ou à une partie de cadre (18), le ressort (14) s'étendant, lorsque le ressort (14) est articulé à la partie de cadre (18), complètement sous le châssis (2) et dans une orientation approximativement horizontale lorsque la barre de liaison (3) est à l'état pivoté vers le bas.

2. Chariot de déplacement selon la revendication 1, **caractérisé en ce que** le ressort (14) est un ressort à pression de gaz (15).

3. Chariot de déplacement selon la revendication 1, **caractérisé en ce que** le ressort (14) est un ressort mécanique à amortissement hydraulique.
